# EUROPÄISCHE PATENTSCHRIFT

(11) **EP 1 330 617 B1**
(45) Veröffentlichungstag und Bekanntmachung des Hinweises auf die Patenterteilung: **26.10.2005**
(21) Anmeldenummer: 01999135.5
(22) Anmeldetag: 30.10.2001
(51) Int. Cl.: F16K 31/04, H02K 7/116

(54) **BETÄTIGUNGSVORRICHTUNG, INSBESONDERE FÜR EINE DROSSELEINRICHTUNG**
ACTUATING DEVICE, ESPECIALLY FOR USE IN A THROTTLE DEVICE
DISPOSITIF D'ACTIONNEMENT DESTINE EN PARTICULIER A UN SYSTEME DE RESTRICTEUR

(30) Priorität: 30.10.2000 DE 20018563 U
(43) Veröffentlichungstag der Anmeldung: 30.07.2003
(73) Patentinhaber: Cooper Cameron Corporation, Houston, Texas 77027-9109 (US)
(72) Erfinder: BIESTER, Klaus, 29342 Wienhausen (DE)
(74) Vertreter: Hilgers, Hans Hubert
(86) Internationale Anmeldenummer: PCT/EP2001/012549
(87) Internationale Veröffentlichungsnummer: WO 2002/065006

(56) Entgegenhaltungen:
- EP-A- 0 303 801
- DE-A- 4 447 395
- US-A- 1 979 425
- US-A- 3 738 183

## Beschreibung

Die Erfindung betrifft eine Betätigungsvorrichtung, insbesondere für eine Drosseleinrichtung, mit einer in einem Vorrichtungsgehäuse drehbar gelagerten Drehspindel, welche mit einer Antriebseinrichtung zur Verschiebung eines mit der Drehspindel verbundenen Betätigungselements über eine Getriebeeinrichtung antriebsverbunden ist.

Eine solche Betätigungsvorrichtungen ist aus der Praxis beispielsweise auf dem Gebiet der maritimen oder terrestischen Öl- oder Gasgewinnung bekannt. Die Betätigungsvorrichtung wird entweder manuell oder hydraulisch betrieben. Durch die Betätigungsvorrichtung wird der Durchlass einer Drossel variiert, um den Druck von beispielsweise aus einer Erdölquelle gefördertem Öl abzusenken. Aus der Erdölquelle tritt das Öl unter einem Druck von mehreren hundert bar aus und durch die entsprechende Drosseleinrichtung wird dieser Druck auf weniger als 100 bar reduziert.

Bei einer aus der Praxis bekannten Betätigungsvorrichtung ist durch ein Handrad eine im Vorrichtungsgehäuse drehbar gelagerte Drehspindel in axialer Richtung verstellbar. Die Drehspindel ist mit einem Betätigungselement verbunden, durch das die Drosselung in der Drosseleinrichtung beeinflusst wird. In der Regel ist zwischen Handrad und Drehspindel eine Getriebeeinrichtung angeordnet.

Weiterhin ist aus der Praxis eine Betätigungsvorrichtung bekannt, bei der die Drehspindel durch eine hydraulisch betriebene Antriebseinrichtung verstellt wird, wobei in diesem Fall die Drehspindel auch als Teil einer Kolben-Zylinder-Einheit ausgebildet sein kann, bei der ein Kolben innerhalb eines Zylindergehäuses durch entsprechenden Hydraulikdruck verschiebbar ist.

Bei solchen Betätigungsvorrichtungen ist zu beachten, dass diese in entlegenen und/oder schwer zugänglichen Gegenden angeordnet sind, wie beispielsweise unterhalb des Meeresspiegels. Eine manuelle Betätigung ist daher mit erheblichem Aufwand verbunden, kostenintensiv und nicht ungefährlich für die betätigende Person. Weiterhin ist die manuelle Einstellung der Betätigungsvorrichtung recht ungenau und schwer überprüfbar. Bei einer hydraulisch gesteuerten Betätigungsvorrichtung sind eine Vielzahl von Hydraulikleitungen, entsprechende Anschlüsse, Abdichtelemente, Pumpen und dergleichen erforderlich, um das gesamte Hydrauliksystem zu bilden. Der Aufwand erhöht sich mit jeder zusätzlichen Betätigungsvorrichtung, die ebenfalls über das Hydrauliksystem gesteuert und betrieben wird. Der Aufwand erhöht sich noch, wenn die Betätigungsvorrichtung an Gegenden mit hohem Druck angeordnet ist, wie unterhalb des Meeresspiegels. Solche hydraulisch gesteuerten und betriebenen Betätigungsvorrichtungen müssen außerdem häufig auf Lecks und dergleichen überprüft werden, wobei das gesamte Hydrauliksystem mit allen Zu- und Ableitungen, Anschlüssen, Pumpen und dergleichen auf Lecks überprüft wird.

Ein weiterer Nachteil bei solchen hydraulischen Betätigungsvorrichtungen ist, dass der Aufwand zur genauen Steuerung der Betätigungsvorrichtung sowohl vorrichtungsmäßig als auch kostenmäßig sehr hoch ist.

Weiter ist eine Betätigunsvorrichtung eines Absperrarmatur mit zwei Motoren aus DE 44 47 395 A bekannt.

Dieses Dokument wird als nächstliegender Stand der Technik angesehen und korrespondiert mit dem Oberbegriff des Anspruchs 1.

Schließlich ist bei sowohl den manuell als auch den hydraulisch betätigten Betätigungsvorrichtungen zu beachten, dass diese spezielle Sicherheitseinrichtungen aufweisen müssen, um beispielsweise im Zusammenhang mit der Drosseleinrichtung ein unbeabsichtigtes Öffnen der Drossel, unter anderem einem Druckabfall im Hydrauliksystem, zu verhindern. Ansonsten könnten schwere Schäden bei ungedrosseltem Austreten des unter hohem Druck stehenden Öls im gesamten Fördersystem auftreten.

Der Erfindung liegt daher die Aufgabe zugrunde, eine Betätigungsvorrichtung der eingangs genannten Art dahingehend zu verbessern, dass diese sicher und von einfachem Aufbau ist und ohne große Wartungstätigkeiten sowie ohne Einbußen in der Funktionalität der Betätigungsvorrichtung und mit verminderten Kosten insbesondere in einfacher Weise ferngesteuert betrieben werden kann.

Diese Aufgabe wird im Zusammenhang mit den Merkmalen des Oberbegriffs des Anspruchs 1 dadurch gelöst, dass die Antriebseinrichtung wenigstens zwei einzeln oder synchron betreibbare elektrische Motoren und die Getriebeeinrichtung zumindest eine selbsthemmende Getriebeeinheit aufweisen, welche Getriebeeinheit zur Drehung der Drehspindel mit beiden elektrischen Motoren antriebsverbunden ist.

Durch die elektrische Ausgestaltung der Antriebseinrichtung entfallen entsprechende hydraulische Einrichtungen, wie Hydraulikleitungen, Pumpen oder dergleichen. Die Betätigungsvorrichtung, insbesondere die elektrischen Motoren, werden über ein elektrisches Kabel versorgt und gesteuert. Das elektrische Kabel ist bei entsprechender Ausbildung druck- und temperaturunempfindlich. Eine manuelle Betätigung der Betätigungsvorrichtung oder häufige Wartungstätigkeiten durch Wartungspersonal sind nicht mehr notwendig.

Die Steuerung der Betätigungsvorrichtung und deren Überwachung kann von einer weit entfernten Station erfolgen, so dass entsprechende Steuer- und Kontrolleinrichtungen in der nähe der Betätigungsvorrichtung, wie beispielsweise auf einer Bohrplattform oder dergleichen, nicht notwendig sind. Statt dessen können die entsprechenden Einrichtungen am Festland und weit entfernt von der Betätigungsvorrichtung angeordnet sein.

Die Antriebseinrichtung der erfindungsgemäßen Betätigungsvorrichtung ist so ausgelegt, dass einerseits die elektrischen Motoren alternativ betrieben werden können, wodurch eine redundante Anordnung der Antriebseinrichtung gegeben ist. Bei Ausfall oder unzureichender Tätigkeit eines elektrischen Motors, kann dieser durch den anderen ersetzt werden.

Bei einer anderen Betriebsart der Antriebseinrichtung sind die beiden elektrischen Motoren auch gleichzeitig betreibbar, wobei sie in ihrer Antriebstätigkeit bezüglich der Drehspindel synchronisiert sind. Auf diese Weise sind höhere Drehmomente durch die Antriebseinrichtung übertragbar.

Separate Sicherheitsmaßnahmen zur Verhinderung eines unbeabsichtigten Verstellens insbesondere des Betätigungselements bzw. der Drehspindel und damit eine unbeabsichtigten Einwirkung auf die Drosseleinrichtung sind erfindungsgemäß durch die Verwendung der selbsthemmenden Getriebeeinheit nicht mehr notwendig bzw. möglich. Die Selbsthemmung der Getriebeeinheit führt dazu, dass diese auch durch beliebig große Antriebsmomente nicht bewegbar ist und das Antriebsmoment durch proportionale Reibkräfte innerlich blockiert wird. Die Selbsthemmung ist durch Betätigung der Antriebseinrichtung lösbar, indem diese ein entsprechendes Lösemoment auf die Getriebeeinheit überträgt. Bei einer Drosseleinrichtung ist in der Regel eine Selbsthemmung in Richtung eines Öffnens der Drosseleinrichtung ausreichend. Es ist allerdings ebenso möglich, die Getriebeeinrichtung in beide Bewegungsrichtungen selbsthemmend auszubilden.

Um insbesondere Geschwindigkeit und Drehmoment der elektrischen Motoren einfacher überwachen zu können, Motoren von hoher Zuverlässigkeit und hoher Effektivität bereitzustellen, können die elektrischen Motoren als Servomotoren, insbesondere Gleichstrom-Servomotoren ausgebildet sein. Diese Servomotoren sind in der Regel bürstenlos.

Um jeden der elektrischen Motoren separat oder auch synchron betreiben zu können und die Redundanz der Antriebseinrichtung nach außen fortzusetzen, kann jeder elektrische Motor mit einer separaten Steuereinrichtung elektrisch verbunden sein. Wie bereits eingangs erwähnt, kann diese Steuereinrichtung weit entfernt von der Betätigungsvorrichtung angeordnet sein.

Um die Redundanz auch am Vorrichtungsgehäuse und für die entsprechenden Anschlussleitungen erhalten zu können, kann für jeden elektrischen Motor ein elektrischer Anschluss im Vorrichtungsgehäuse ausgebildet sein.

Eine selbsthemmende Getriebeeinheit kann in unterschiedlicher Weise aufgebaut sein. Es sind beispielsweise selbsthemmende Planetenradgetriebe, Klinkengetriebe oder dergleichen bekannt. Eine einfach aufgebaute, selbsthemmende Getriebeeinheit kann darin gesehen werden, dass diese ein Schneckengetriebe aus wenigstens Schnecke und Schneckenrad ist, wobei das Schneckenrad der Drehspindel und die Schnecke den elektrischen Motoren zugeordnet ist.

Zur einfachen Antriebsverbindung mit den elektrischen Motoren, kann die Schnecke auf einer Schneckenwelle angeordnet sein, die mit den beiden elektrischen Motoren antriebsverbunden ist.

In diesem Zusammenhang kann es insbesondere als vorteilhaft angesehen werden, wenn beispielsweise die elektrischen Motoren jeweils mit gegenüberliegenden Wellenenden der Schneckenwelle antriebsverbunden sind. Es ist ebenfalls möglich, dass die beiden elektrische Motoren auf der gleichen Seite der Schneckenwelle und in deren axialer Richtung hintereinander angeordnet sind.

Eine einfache Antriebsverbindung kann bei einem Ausführungsbeispiel der Erfindung darin gesehen werden, dass jeder elektrische Motor über seine Motorwelle mit dem jeweiligen Wellenende drehfest verbunden ist.

Alternativ ist es ebenso möglich, dass jedes Wellenende in einem der elektrischen Motoren als Motorwelle drehfest angeordnet ist.

Zur wartungsfreien Lagerung der Schneckenwelle kann jedes Wellenende durch Kugellager und/oder Rollenlager im Vorrichtungsgehäuse drehbar gelagert sein.

Durch Schnecke und Schneckenrad erfolgt außerdem in einfacher Weise eine Übersetzung und ist eine Übertragung eines hohen Drehmoments möglich. Um eine noch höhere Übersetzung mit hoher Zuverlässigkeit, hoher Tragfähigkeit und hoher Lebensdauer zu erreichen, kann die Getriebeeinrichtung weiterhin einen Kugelgewindetrieb aus wenigstens einer Kugelmutter und der Drehspindel als Kugelumlaufspindel aufweisen.

Um die Last durch einen solchen Gewindetrieb noch besser übertragen zu können, kann die Getriebeeinrichtung einen Rollengewindetrieb aus wenigstens einer Rollenmutter und der Drehspindel als Rollenumlaufspindel aufweisen.

Um auf eine Rollenrückführung bei dem Rollengewindetrieb verzichten zu können, kann der Rollengewindetrieb ein Planetenrollengewindetrieb sein.

Um die Gewindetriebmutter, sei es die Kugelmutter oder die Rollenmutter, in einfacher Weise im Vorrichtungsgehäuse unterbringen zu können, kann diese in einer Lagerhülse angeordnet sein, die im Vorrichtungsgehäuse drehbar, aber axial unverschieblich gelagert ist. In dieser Lagerhülse kann die Gewindetriebmutter kraft-, form- oder reibschlüssig gehalten sein.

Um die Antriebskraft auf die Gewindetriebmutter in einfacher Weise vom Schneckengetriebe her zu übertragen, kann an wenigstens einem Ende der Gewindetriebmutter eine Endverzahnung angeordnet sein, die mit einer Verzahnung des Schneckenrades in Eingriff ist.

Um in diesem Zusammenhang möglichst wenig Bauteile verwenden zu müssen und die Kosten zu reduzieren, kann die Endverzahnung vom Schneckenrad gebildet sein, wobei dieses direkt an der Gewindetriebmutter ausgebildet sein kann.

Um die Herstellung in diesem Zusammenhang zu vereinfachen, kann allerdings das Schneckenrad auch separat ausgebildet und lösbar insbesondere an der Gewindetriebmutter befestigt sein.

Für Schneckenrad und Schnecke sind verschiedene Ausführungsformen denkbar. Beispielsweise kann das Schneckenrad ein Globoidrad sein, das auf seiner Außenseite eine im Wesentlichen konkav gekrümmte Verzahnung aufweist. Ebenso ist für das Schneckenrad ein Stirnrad denkbar.

In analoger Weise kann die Schnecke als Zylinderschnecke oder als Globiodschnecke ausgebildet sein.

Um Gewindetriebmutter und entsprechend Lagerhülse sicher gegenüber Beanspruchungen im Vorrichtungsgehäuse anordnen zu können, kann die Lagerhülse mittels wenigstens eines Axiallagers im Vorrichtungsgehäuse gelagert sein.

Um die erfindungsgemäße Betätigungsvorrichtung auch ohne elektrische Versorgung oder bei deren Ausfall zumindest im Notfall betätigen zu können, kann wenigstens einem elektrischen Motor eine insbesondere manuell betätigbare Betätigungseinrichtung zugeordnet sein. Durch diese wird auf den elektrischen Motor so eingewirkt, dass dessen Motorwelle in gewünschter Richtung verdrehbar ist.

Ein Ausführungsbeispiel für eine solche Notbetätigungseinrichtung kann einen in Richtung Bereitschaftsstellung federbeaufschlagten Drehbolzen aufweisen, der an seinem dem elektrischen Motor zuweisenden Ende mit der Motorwelle drehfest verbindbar ist. In Bereitschaftsstellung ist der Drehbolzen außer Eingriff mit der Motorwelle und erst durch manuelle Betätigung und Drücken des Drehbolzens gegen die Federbeaufschlagung wird dieser mit seinem Ende der Motorwelle angenähert und mit dieser drehfest verbunden. Die drehfeste Verbindung kann beispielsweise dadurch erfolgen, dass das dem Drehbolzen zuweisende Ende der Motorwelle einen entsprechenden Querschnitt aufweist, der formschlüssig vom zuweisenden Ende des Drehbolzens ergreifbar ist.

Um die Notbetätigungseinrichtung direkt manuell betätigen zu können, kann der Drehbolzen durch eine Bohrung einer Außenwandung des Vorrichtungsgehäuses abgedichtet nach außen geführt sein und dort ein Betätigungsende aufweisen. Dies kann als Handrad oder dergleichen ausgebildet sein.

Um im Vorrichtungsgehäuse Antriebseinrichtung und Getriebeeinrichtung auch gegenüber hohem Druck und anderen widrigen Umwelteinflüssen schützen zu können, kann das Vorrichtungsgehäuse einen Zentralkörper aus Metall, insbesondere Aluminium oder eine entsprechende Aluminiumlegierung, aufweisen, in dessen Mittelbohrung die Gewindetriebmutter gelagert ist und entlang welcher sich die Drehspindel erstreckt. Der Zentralkörper kann mit einer ausreichend dicken Wandung ausgebildet sein, um entsprechend hohen Drücken standhalten zu können.

Um im Zentralkörper auch die elektrischen Motoren im Wesentlichen unterbringen zu können, kann der Zentralkörper zwei radial nach außen offene Motoröffnungen aufweisen, in denen jeweils ein elektrischer Motor lösbar befestigt ist, wobei sich zwischen den Motoröffnungen und im Wesentlichen tangential zur Mittelbohrung eine Verbindungsöffnung zur Aufnahme von Schneckenwelle und Schnecke erstreckt. Die Verbindungsöffnung kann auch dadurch gebildet sein, dass die Zentralöffnung im Bereich der Motoröffnungen aufgeweitet ist zur Aufnahme von Schneckenwelle und Schnecke. In diesem Fall ist die Verbindungsöffnung im Wesentlichen Teil der Zentralöffnung.

Um im Zentralkörper die entsprechenden Einrichtungen und insbesondere die Getriebeeinrichtung in einfacher Weise anordnen zu können, kann dieser an einem Ende mit einer Endplatte lösbar verschließbar sein.

Ein einfaches Ausführungsbeispiel eines Zentralkörpers kann darin gesehen werden, dass dieser im Wesentlichen zylindrisch ausgebildet ist. Um diesen und gegebenenfalls an der Endplatte weiterhin angeordnete Einrichtungen gegenüber äußeren Einflüssen schützen zu können, kann der Zentralkörper mit seiner Endplatte in einer an einem Ende von einer Deckplatte lösbar verschließbaren Gehäusehülse angeordnet sein.

Um gegebenenfalls die Betätigungsvorrichtung mit oder ohne Drosseleinrichtung transportieren zu können, kann von einer Außenseite der Deckplatte ein Hebezapfen abstehen. Dieser ist von einem entsprechenden Greifwerkzeug an einem Kran, einem Unterwasserfahrzeug oder dergleichen ergreifbar und die Betätigungsvorrichtung ist dann transportierbar.

Um in einfacher Weise von einer entfernten Position feststellen zu können, in welcher Drehstellung sich die Drehspinne relativ zur Gewindetriebmutter findet, kann ein Positionssensor im Wesentlichen mittig in der Endplatte angeordnet und einem Ende der Drehspindel zugeordnet sein. Durch diesen Sensor, insbesondere einen Linearpositionssensor, kann der Abstand zwischen Sensor und Ende der Drehspindel ermittelt und über entsprechend elektrische Leitungen übertragen werden.

Ist die erfindungsgemäße Betätigungsvorrichtung für eine Drosseleinrichtung vorgesehen, kann es als günstig betrachtet werden, dass Zentralkörper und/oder Gehäusehülse an einem Drosselgehäuse der Drosseleinrichtung lösbar befestigbar sind, wobei sie mit ihren durch Endplatte bzw. Deckplatte unverschlossenen Befestigungsenden von außen am Drosselgehäuse anlegbar sind.

Zur Befestigung von Zentralkörper und/oder Gehäusehülse am Drosselgehäuse sind beispielsweise Schrauben verwendbar, die direkt in das Drosselgehäuse oder den Zentralkörper bzw. die Gehäusehülse eingeschraubt werden. Ebenso ist es möglich, dass die Gehäusehülse einen radial auswärtsweisenden Absatz an ihrem Befestigungsende aufweist, der von einem an einem Befestigungsring radial einwärts vorstehenden Absatz hintergreifbar ist. In diesem Fall wird der Befestigungsring direkt mit dem Drosselgehäuse verschraubt.

Um das Betätigungselement der erfindungsgemäßen Betätigungsvorrichtung im Wesentlichen direkt im Zusammenhang mit der Drosseleinrichtung einsetzen zu können, kann das Betätigungselement über das offene Befestigungsende des Zentralkörpers vorstehen und entlang einer Drosselelementbohrung im Drosselghäuse bis in einen Drosselraum vorschiebbar sein, wobei der Drosselraum einen Fluideinlass und einen Fluidauslass im Drosselgehäuse verbindet. Auf diese Weise sind Verlängerungen für das Betätigungselement im Drosselgehäuse nicht notwendig.

Als weiterhin von Vorteil kann angesehen werden, wenn im Wesentlichen am freien Ende des Betätigungselements ein Drosselelement zur Variation des Fluiddurchlasses im Drosselraum angeordnet ist. In diesem Fall umfasst die Betätigungsvorrichtung gemäß Erfindung direkt das Drosselelement und bildet quasi eine Drosselelementverstelleinrichtung, die je nach Verstellung des Drosselelements, d. h. je nach Drehstellung der Drehspindel, den Fluiddurchlass zwischen Fluideinlass und Fluidauslass über den Drosselraum variiert.

Für ein solches Drosselelement sind verschiedene Ausführungsbeispiele denkbar.

Beispielsweise kann im Drosselraum eine perforierte oder gelochte Durchlasshülse oder Regulierhülse angeordnet sein, auf die als Drosselelement eine Drosselhülse aufschiebbar ist. Die Drosselhülse schließt je nach Grad des Aufschiebens auf die Durchlasshülse deren Lochung, so dass mehr oder weniger Fluid aus dem Fluideinlass über die Durchlasshülse zum Fluidauslass gelangt. Ist die Drosselhülse so weit wie möglich auf die Durchlasshülse aufgeschoben, ist der Fluideinlass in Richtung Fluidauslass in der Regel vollständig verschlossen.

Die Lochung der Durchlasshülse kann durch in derem Mantel in unterschiedlicher Größe und in unterschiedlicher Anordnung gebildete Radialöffnungen realisiert sein.

Bei einem anderen Ausführungsbeispiel für das Drosselelement, kann dieses als ein eine in den Drosselraum mündende Durchlassbohrung des Fluideinlasses variabel verschließender Verschlussstopfen ausgebildet sein. Der Verschlussstopfen ist dabei durch das Betätigungselement je nach Drehstellung der Drehspindel mehr oder weniger in Richtung Fluidauslass verschiebbar und überdeckt entsprechend mehr oder weniger die Durchlassbohrung des Fluideinlasses.

Eine einfache Zuordnung von Betätigungselement und Drehspindel kann darin gesehen werden, dass beide koaxial angeordnet und an ihren aufeinander zuweisenden Enden lösbar miteinander verbunden sind. Durch die lösbare Verbindung kann je nach Erfordernis ein längeres oder kürzeres Betätigungselement mit gegebenenfalls unterschiedlichen Drosselelementen im Zusammenhang mit der Betätigungsvorrichtung eingesetzt werden.

Es wurde bereits eingangs darauf hingewiesen, dass die elektrischen Motoren einzeln als auch synchron betreibbar sind. Die Synchronisierung der Motoren kann beispielsweise mechanisch erfolgen. Eine solche mechanische Synchronisierung erfordert allerdings sehr genau einzuhaltende Fertigungstoleranzen. Eine vereinfachte Synchronisierung kann darin gesehen werden, dass die elektrischen Motoren softwaremäßig und über ihre Steuereinrichtungen synchronisiert sind.

Um in diesem Zusammenhang die Steuerung zur Synchronierung zu vereinfachen, kann ein elektrischer Motor als Master und der andere elektrische Motor als Slave geschaltet sein. Es ist aber auch eine Master/Master-Kombination möglich oder ein Justieren mit nur einem Motor im Notfall.

Zur elektrischen Verbindung der insbesondere im Zentralkörper enthaltenen Teile können in der Endplatte elektrische Durchführungen angeordnet sein.

Um zumindest das Innere der Gehäusehülse druckmäßig relativ zu einem hohen Umgebungsdruck anpassen zu können, kann das Vorrichtungsgehäuse oder insbesondere der Raum zwischen Zentralkörper und Gehäusehülse ölgefüllt und kompensiert sein. Die Kompensierung betrifft in diesem Fall insbesondere eine zusätzliche Zuführung oder Entnahme von Öl aus dem Vorrichtungsgehäuse, je nach Temperatur.

Im Folgenden werden vorteilhafte Ausführungsbeispiele der Erfindung anhand der in der Zeichnung beigefügten Figuren näher erläutert.

Es zeigen:
Figur 1 eine Seitenansicht eines Ausführungsbeispiels einer erfindungsgemäßen Betätigungsvorrichtung mit Drosseleinrichtung von Seiten eines Fluideinlasses;
Figur 2 einen Längsschnitt entlang der Linie II-II aus Figur 1;
Figur 3 einen Schnitt entlang der Linie III-III aus Figur 1;
Figur 4 eine Seitenansicht analog zu Figur 1 eines zweiten Ausführungsbeispiels einer erfindungsgemäßen Betätigungsvorrichtung, und
Figur 5 einen Längsschnitt entlang der Linie V-V aus Figur 4.

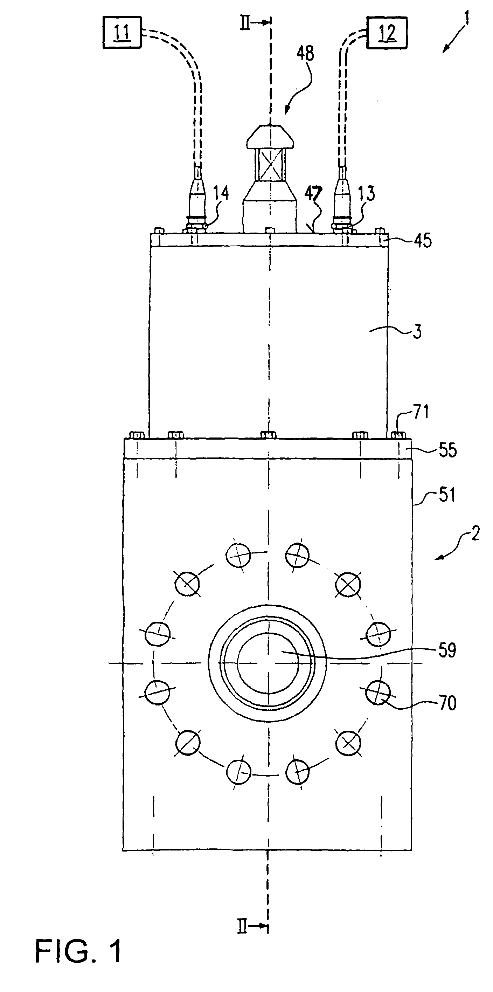

In Figur 1 ist eine Seitenansicht eines erfindungsgemäßen Ausführungsbeispiels einer Betätigungsvorrichtung 1 mit angeschlossener Drosseleinrichtung 2 von Seiten eines Fluideinlasses 59 her dargestellt. Die Betätigungsvorrichtung 1 ist mit einem Drosselgehäuse 51 mittels eines Befestigungsrings 55 und einer Vielzahl von Schraubbolzen 71 lösbar befestigt.

Ein entsprechendes Vorrichtungsgehäuse 3 der Betätigungsvorrichtung 1 ist auf seiner dem Drosselgehäuse 51 abgewandten Seite mit einer Deckplatte 45 dicht und lösbar verschlossen. In der Deckplatte 45 sind 2 elektrische Anschlüsse 13 und 14 vorgesehen, die mittels elektrischer Anschlussleitungen mit entfernt angeordneten Steuereinrichtungen 11, 12 verbunden sind.

Von einer Außenseite 47 der Deckplatte 45 steht ein Hebezapfen 48 vor, durch den zumindest die Betätigungsvorrichtung 1 durch ein entsprechendes Hebewerkzeug, wie einen Kran, einen Greifarm oder dergleichen, von der Drosseleinrichtung 2 entfernbar oder an diese heranführbar ist.

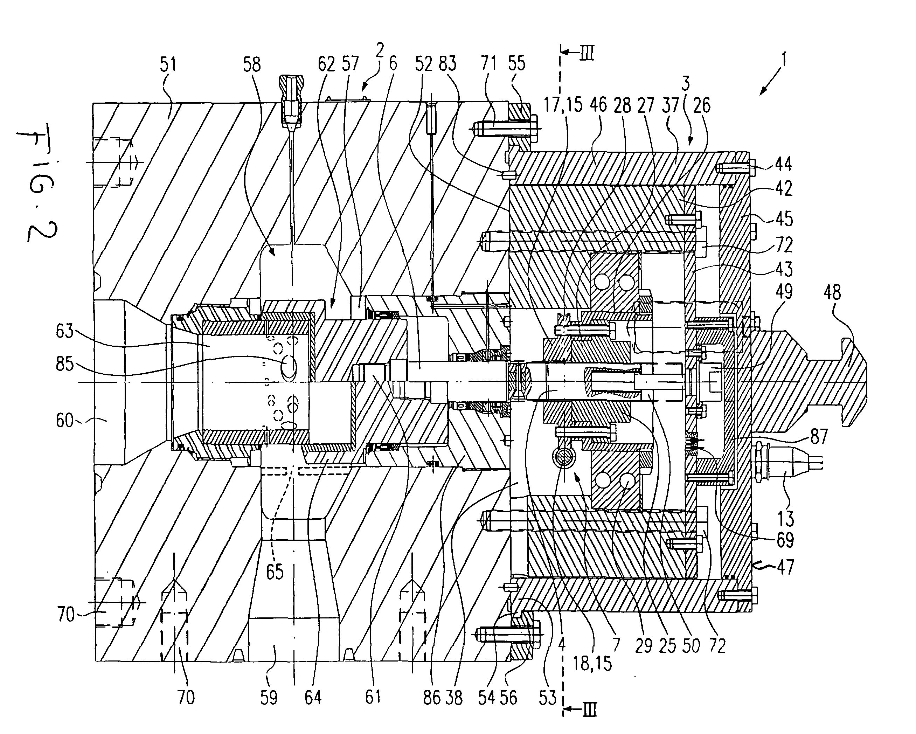

In Figur 2 ist ein Schnitt entlang der Linie II-II aus Figur 1 dargestellt.

Die Drosseleinrichtung 2 weist in ihrem Drosselgehäuse 51 zumindest einen Fluideinlass 59 und einen Fluidauslass 60 auf. Gegebenenfalls sind auch mehrere Fluidauslässe anordbar.

Zwischen Fluideinlass 59 und Fluidauslass 60 ist ein Drosselraum 58 angeordnet, in dem eine Durchlasshülse 63 mit einer Anzahl von Durchlassöffnungen 85 angeordnet ist. Gegenüberliegend zum Fluidauslass 60 erstreckt sich im Drosselgehäuse 51 eine Drosselelementbohrung 57, in dem ein Drosselelement 62 in axialer Richtung verschiebbar gelagert ist.

In Figur 2 sind zwei Extremstellungen des als Drosselhülse 64 ausgebildeten Drosselelements 62 dargestellt. In der in Figur 2 in der unteren Hälfte dargestellten Position der Drosselhülse 64 ist diese so weit wie möglich von der Durchlasshülse 63 abgezogen, so dass alle Durchlassöffnungen 85 relativ zum Drosselraum 58 geöffnet sind. In der in der oberen Hälfte der Figur 2 dargestellten Position der Drosselhülse 64 ist diese so weit wie möglich auf die Durchlasshülse 63 aufgeschoben, wobei in dieser Position alle Durchlassöffnungen 85 abgedeckt sind und eine Verbindung zwischen Fluideinlass 59 und Fluidauslass 60 unterbrochen ist.

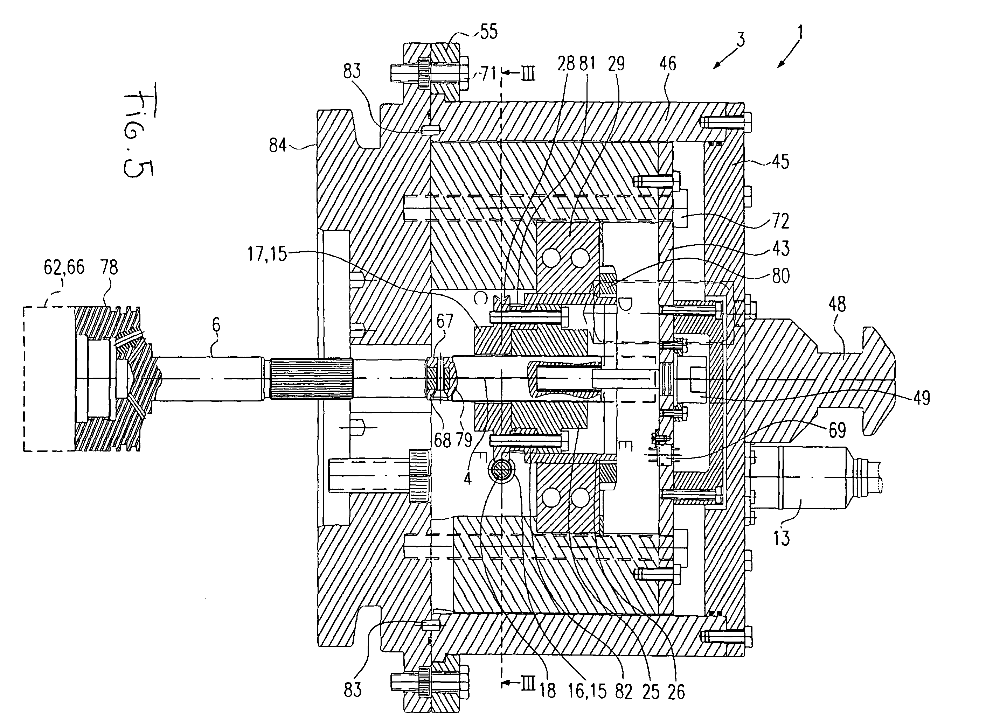

Das Drosselelement 62 ist am freien Ende 61 eines Betätigungselemts 6 lösbar befestigt. Das Betätigungselement 6 erstreckt sich entlang der Drosselelementbohrung 57 bis zu einer Drehspindel 4. Aufeinander zuweisende Enden 67, 68 von Drehspindel 4 und von Betätigungselement 6 sind mittels einer Schraube 79, siehe auch Figur 5, lösbar miteinander verbunden. Im Bereich der Drosselelementbohrung 57 ist eine Zwischenhülse 86 angeordnet, durch die das Betätigungselement 6 dicht hindurchgeführt und in welcher dieses in axialer Richtung verschiebbar geführt ist. Auf ihrer dem Drosselraum 58 zuweisenden Seite der Zwischenhülse 86 weist diese eine Aufnahmeöffnung für das Drosselelement 62 auf.

Die Betätigungsvorrichtung 1 ist über ihr Vorrichtungsgehäuse 3 an dem Drosselgehäuse 51 auf Seiten der nach außen mündenden Drosselelementbohrung 57 lösbar befestigt. Das Vorrichtungsgehäuse 3 ist aus einem Zentralkörper 37 und einer diesen umgebenden Gehäusehülse 46 gebildet. Die Gehäusehülse 46 ist im Wesentlichen ein Hohlzylinder, der an einem seiner Enden 44 durch die Deckplatte 45 dicht verschlossen ist. Die Verbindung zwischen Deckplatte und Gehäusehülse erfolgt durch entsprechende Schraubbolzen. An seinem dem Drosselgehäuse 51 zuweisenden Befestigungsende 53 weist die Gehäusehülse 46 einen radial auswärts vorstehenden Absatz 54 auf. Dieser ist von einem radial einwärts von dem Befestigungsring 55 vorstehenden Absatz 56 in der in Figur 2 dargestellten Befestigungsstellung der Betätigungsvorrichtung 1 hintergriffen. Der Befestigungsring 55 ist durch eine Vielzahl von Schraubbolzen 71 am Drosselgehäuse 51 lösbar befestigt, siehe auch Figur 1.

Zur korrekten Orientierung des Vorrichtungsgehäuses 3 relativ zum Drosselgehäuse 51 sind eine Anzahl von Positionierstiften 83 vorgesehen, die vom Befestigungsende 53 zumindest der Gehäusehülse 46 in Richtung Drosselgehäuse 51 vorstehen.

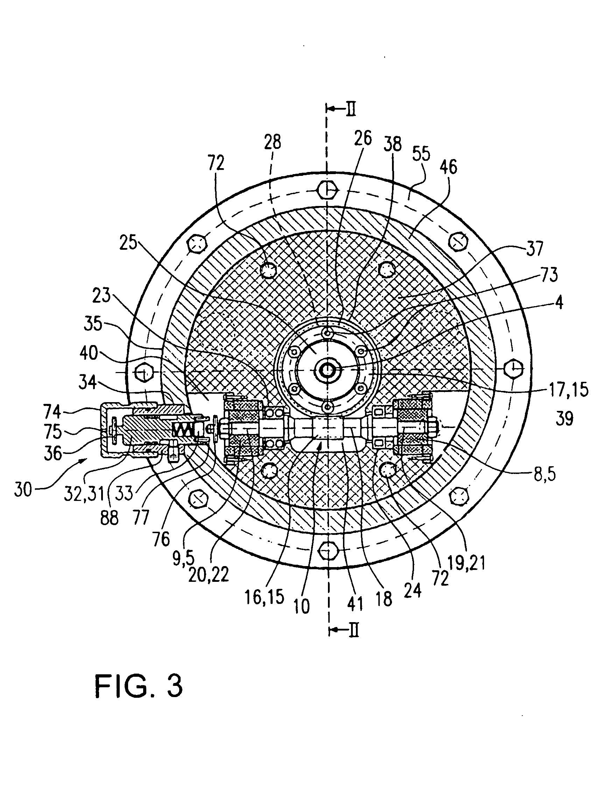

Innerhalb der Gehäusehülse 46 ist ein im Wesentlichen ebenfalls zylindrisch ausgebildeter Zentralkörper 37 angeordnet, der in etwa mittig eine Mittelbohrung 38 aufweist. Diese steht in dem in Figur 2 dargestellten Befestigungszustand der Betätigungsvorrichtung 1 mit der Drosselelementbohrung 57 in Verbindung und entlang der Mittelbohrung 38 ist koaxial zum Betätigungselement 6 die Drehspindel 4 verschiebbar. Die Verschiebung der Drehspindel 4 erfolgt durch Drehung einer Gewindetriebmutter 25, in der die Drehspindel als Kugelumlauf- oder Rollenumlaufspindel drehbar gelagert ist. Drehspindel 4 und Gewindetriebmutter (Kugelmutter oder Rollmutter) bilden einen Teil einer Getriebeeinrichtung 7, über die das Betätigungselement 6 zur Verstellung entlang der Drosselelementbohrung 57 mit einer Antriebseinrichtung 5, siehe Figur 3, antriebsverbunden ist.

Die Gewindetriebmutter 25 ist in einer Lagerhülse 26 drehfest gehalten. Die Lagerhülse 26 ist über Axiallager 59 drehbar, aber in axialer Richtung der Mittelbohrung 38 unverschiebbar gehalten. Die axiale Fixierung der Lagerhülse 26 erfolgt über einen Schraubring 80, siehe auch Figur 5.

An einem dem Betätigungselement 6 zuweisenden Ende 27 der Gewindetriebmutter 25 ist eine Außenverzahnung 28 angeordnet, die von einem lösbar mit der Gewindetriebmutter 25 über Schraubbolzen 82 befestigten Schneckenrad 17 gebildet ist. Das Schneckenrad 17 bildet einen Teil eines Schneckengetriebes 15 und ist mit seiner Verzahnung 28 mit einer entsprechenden Außenverzahnung einer Schnecke 16 als weiterem Teil des Schneckengetriebes 15 in Eingriff, siehe auch Figur 3.

Einem vom Betätigungselement 6 fortweisenden Ende 50 der Drehspindel 4 ist ein Positionssensor 49 zugeordnet. Dieser ist in etwa mittig in einer Endplatte 43 angeordnet. Diese ist lösbar am Ende 42 des Zentralkörpers 37 mittels einer Anzahl von Schrauben befestigt. Dabei verschließt die Endplatte 43 die Mittelbohrung 38 in Richtung Deckplatte 45. Der Positionssensor 49 ist von einer Haube 87 umschlossen, die auf einer Außenseite der Endplatte 43 lösbar befestigt ist und in eine entsprechende Ausnehmung auf eine Innenseite der Deckplatte 45 hineinragt. Im Bereich der Haube 87 und von dieser ebenfalls umschlossen ist eine elektrische Durchführung 69 in der Endplatte 43 angeordnet.

In Figur 3 ist ein Schnitt entlang der Linie III-III aus Figur 2 oder auch III-III aus Figur 5 dargestellt.

Gleiche Teile in Figur 3 wie auch in den übrigen Figuren sind immer mit gleichen Bezugszeichen versehen und werden teilweise nur im Zusammenhang mit einer Figur beschrieben.

Befestigungsring 55, Gehäusehülse 46 und Zentralkörper 37 sind konzentrisch angeordnet, wobei in der Mittelbohrung 38 des Zentralkörpers 37 ebenfalls konzentrisch Lagerhülse 26, Gewindetriebmutter 25 und Drehspindel 4 angeordnet sind.

Das Schneckenrad 17 ist bei einem Ausführungsbeispiel der Erfindung als Globoidrad ausgeführt, in dessen Außenverzahnung eine Zylinderschnecke 16 mit ihrer entsprechenden Außenverzahnung eingreift. Die Schnecke 16 ist als weiterer Teil des Schneckengetriebes 15 auf einer Schneckenwelle 18 angeordnet. Schnecke 16 und Schneckenrad 17 bilden eine Getriebeeinheit 10 als Teil der Getriebeeinrichtung 7, siehe auch Drehspindel 4 und Gewindetriebmutter 25, wobei diese Getriebeeinheit 10 eine selbsthemmende Getriebeeinheit bildet.

Die Schneckenwelle 18 ist mit ihren beiden Wellenenden 19, 20 mit elektrischen Motoren 8, 5 lösbar verbunden, die eine Antriebseinrichtung 5 der Betätigungsvorrichtung 1 bilden. Die elektrischen Motoren 8, 9 sind Servomotoren, insbesondere Gleichstrom-Servomotoren. Die Wellenenden 19, 20 bilden in einem Ausführungsbeispiel die entsprechenden Motorwellen 21, 22. Die in die elektrischen Motoren 8, 9 vorstehenden freien Enden der Motorwellen 21, 22 sind durch Muttern gehalten.

Die elektrischen Motoren 8, 9 sind in Motoröffnungen 39, 40 angeordnet, die nach außen offen im Zentralkörper 37 ausgebildet sind. Die Motoröffnungen 39, 40 sind im Wesentlichen beidseitig zur Mittelbohrung 38 und in radialer Richtung nach außen versetzt zu dieser angeordnet. Zwischen den Motoröffnungen 39, 40 ist eine Verbindungsöffnung 41 vorgesehen, die in etwa tangential zur Mittelbohrung 38 verläuft.

Wie in Figur 2 erkennbar, ist die Verbindungsöffnung 41 durch eine Aufweitung der Mittelbohrung 38 radial auswärts gebildet.

Die Schneckenwelle 18 ist im Bereich ihrer Wellenenden 19, 20 auf Seiten des elektrischen Motors 9 durch ein Kugellager 23 und auf Seiten des elektrischen Motors 8 durch ein Rollenlager 24 drehbar gelagert. Die elektrischen Motoren 8, 9 sind in den Motoröffnungen 39, 40 durch Schrauben oder dergleichen lösbar befestigt.

Im Zentralkörper 37 sind Schraubbolzen 72 im Schnitt nach Figur 3 erkennbar, die sich nach Figur 2 von der Endplatte 43 bis in das Drosselgehäuse 51 zur lösbaren Befestigung des Zentralkörpers 37 an der Drosseleinrichtung 2 erstrecken.

Auf Seiten des elektrischen Motors 9 ist optional eine Notbetätigungseinrichtung 30 anordbar. Diese ist im Wesentlichen durch einen Drehbolzen 32 gebildet, der durch ein Federelement in die in Figur 3 dargestellte Bereitschaftsstellung 31 gedrückt ist. In Bereitschaftsstellung 31 ist der Drehbolzen 32 außer Eingriff mit der Motorwelle 20 des elektrischen Motors 9. Der Drehbolzen 32 ist abgedichtet in einer Bohrung 34 durch eine Außenwand 35 der Gehäusehülse 46 geführt. In dieser Bohrung ist eine Steckhülse 88 zur verschiebbaren und drehbaren Aufnahme des Drehbolzens 32 angeordnet. Nach außen ist auf die Steckhülse 88 ein Gehäuse 74 aufgesteckt, das den Drehbolzen 32 an seinem nach außen vorstehenden Betätigungsende 36 umgibt. In dem Gehäuse 74 ist eine Bohrung 75 zum Druckausgleich vorgesehen.

Ein der Motorwelle zuweisendes Ende 33 des Drehbolzens 32 ist mit Steckstiften 77 oder anderen Einrichtungen versehen, die formschlüssig ein entsprechend geformtes Ende der Motorwelle 22 aufnehmen bzw. mit einer an diesem Ende drehfest befestigten Steckscheibe 46 in Eingriff geraten.

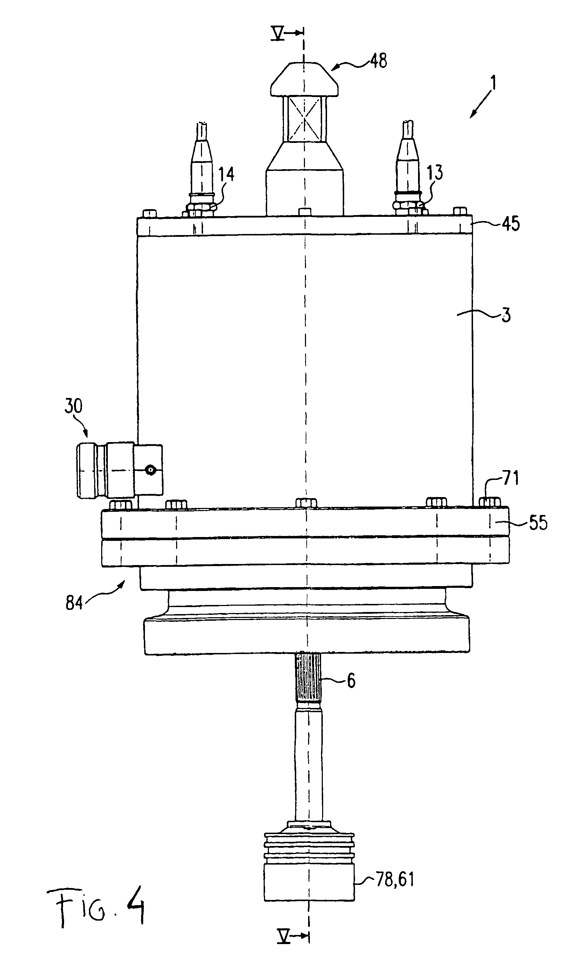

In Figur 4 ist ein zweites Ausführungsbeispiel der erfindungsgemäßen Betätigungsvorrichtung 1 dargestellt. Diese unterscheidet sich im Wesentlichen von dem bisher beschriebenen Ausführungsbeispiel durch eine mittels des Befestigungsrings 55 am Vorrichtungsgehäuse 3 befestigten Anschlussplatte 84 und durch ein anderes Drosselelement 62, siehe insbesondere Figur 5, am freien Ende 61 des Betätigungselements 6.

Eine Drosseleinrichtung 2 mit entsprechendem Drosselgehäuse 51 ist in Figur 4 nicht dargestellt.

Figur 5 entspricht einem Schnitt entlang der Linie V-V aus Figur 4.

Zur genauen Beschreibung der Betätigungsvorrichtung 1 nach Figur 5 wird insbesondere auf die Figuren 2 und 3 verwiesen, wobei Figur 3 ebenfalls einem Schnitt entlang der Linie III-III aus Figur 5 entspricht.

Im Folgenden werden nur Unterschiede zu dem ersten Ausführungsbeispiel erläutert.

Die Anschlussplatte 84 dient zum Anschließen eines nicht dargestellten Drosselgehäuses. Dieses weist im Bereich des Fluideinlasses 59 eine Durchlassbohrung 65 auf, siehe die gestrichelte Darstellung in Figur 2. Die Durchlassbohrung 65 ersetzt in diesem Fall die Durchlasshülse 63. Anstelle einer entsprechenden Drosselhülse 64 wird bei dem Ausführungsbeispiel nach Figur 5 am freien Ende 61 des Betätigungselements 6 ein Verschlussstopfen 66 als Drosselelement 62 angeordnet. Zur Anordnung dieses Verschlussstopfens 66 ist am freien Ende des Betätigungselements 6 eine Drosselelementaufnahme 78 angeordnet. In dieser ist der Verschlussstopfen 66 lösbar gehalten.

Bezüglich der Figuren 1 und 4 wird noch darauf hingewiesen, dass in Figur 4 die Notbetätigungseinrichtung 30, siehe in diesem Zusammenhang die Darstellung nach Figur 3, dargestellt ist, während sie bei dem Ausführungsbeispiel nach Figur 1 nicht vorhanden ist. Es sei nochmals darauf hingewiesen, dass eine solche Notbetätigungseinrichtung 30 ein optionales Merkmal ist.

Im Folgenden wird die Betriebsweise der erfindungsgemäßen Betätigungsvorrichtung kurz anhand der beigefügten Figuren erläutert.

Die Betätigungsvorrichtung 1 weist eine elektrische Antriebsvorrichtung aus zwei Servomotoren 8, 9 auf. Diese sind über die entsprechenden Anschlussleitungen und ihre Steuereinrichtungen 11, 12 von entfernter Stelle fernsteuerbar. Bei Betätigung eines oder beider der Motoren im Synchronbetrieb treiben diese die Schneckenwelle 18 und damit die Schnecke 16 an. Diese ist in Eingriff mit dem zugehörigen Schneckenrad 17. Durch Schnecke und Schneckenrad ist ein selbsthemmendes Schneckengetriebe gebildet, das zumindest entgegengesetzt zur Vorschubrichtung der Drehspindel 4 in Richtung Drosseleinrichtung gehemmt ist. Erst durch Aufbringen eines Lösemoments durch die Servomotoren 8, 9 kann die Selbsthemmung des Schneckengetriebes gelöst werden.

Durch das Schneckengetriebe ergibt sich in einfacher Weise und insbesondere in Zusammenwirkung mit dem Rollengewindetrieb als weiteren Teil der Getriebeeinrichtung 7 eine hohe Übersetzung und die Möglichkeit der Übertragung eines hohen Drehmoments. Die Übersetzung kann durch entsprechende Auswahl von Schnecke, Schneckenrad, Gewindetriebmutter und Drehspindel je nach Wunsch ausgewählt werden.

Bei Drehung der direkt mit dem Schneckenrad drehfest verbundenen Gewindetriebmutter 25 wird entsprechend die Drehspindel 4 in Richtung Drosseleinrichtung aus- oder in entgegengesetzter Richtung eingefahren. Mit der Drehspindel 4 ist das Betätigungselement 6 verbunden, an dessen freiem Ende ein entsprechendes Drosselelement angeordnet ist. Betätigungselement mit Drosselelement greifen in das zur Betätigungseinrichtung 1 benachbarte Drosselgehäuse ein und dienen dort zur Variation des Fluiddurchlasses zwischen Fluideinlass und Fluidauslass.

Eine Notbetätigungseinrichtung kann zumindest einem der Servomotoren optional zugeordnet sein, siehe Figuren 3 und 4.

## Patentansprüche

1. Betätigungsvorrichtung (1), insbesondere für eine Drosseleinrichtung (2), mit einer in einem Vorrichtungsgehäuse (3) drehbar gelagerten Drehspindel (4), welche mit einer Antriebseinrichtung (5) zur Verschiebung eines mit der Drehspindel verbundenen Betätigungselements (6) über eine Getriebeeinrichtung (7) antriebsverbunden ist,
**dadurch gekennzeichnet,**
**dass** die Antriebseinrichtung (5) wenigstens zwei alternativ und redundant oder synchron zur Verschiebung des Betätigungselements (6) betreibbare, elektrische Motoren (8, 9) und die Getriebeeinrichtung (7) zumindest eine selbsthemmende Getriebeeinheit aufweist, welche Getriebeeinheit (10) zur Drehung der Spindel (4) mit beiden elektrischen Motoren (8, 9) antriebsverbunden ist und ein Schneckengetriebe (15) aus wenigstens Schnecken (16) und Schneckenrad (17) aufweist, wobei das Schneckenrad (17) der Drehspindel (4) und die Schnecke (16) den elektrischen Motoren (8, 9) zugeordnet ist und wobei die Getriebeeinrichtung (7) einen Gewindetrieb aus wenigstens einer Gewindemutter (25) und der Drehspindel (4) aufweist.

2. Betätigungsvorrichtung nach Anspruch 1,
**dadurch gekennzeichnet,**
**dass** der elektrische Motor ein Servomotor, insbesondere Gleichstrom-Servomotor ist.

3. Betätigungsvorrichtung nach Anspruch 1 oder 2,
**dadurch gekennzeichnet,**
**dass** jeder elektrische Motor (8, 9) mit einer separaten Steuereinrichtung (11, 12) elektrisch verbunden ist.

4. Betätigungsvorrichtung nach einem der vorangehenden Ansprüche,
**dadurch gekennzeichnet,**
**dass** für jeden elektrischen Motor (8, 9) ein elektrischer Anschluss (13, 14) im Vorrichtungsgehäuse (3) ausgebildet ist.

5. Betätigungsvorrichtung nach einem der vorangehenden Ansprüche,
**dadurch gekennzeichnet,**
**dass** die Schnecke (16) auf einer Schneckenwelle (18) angeordnet ist, die mit beiden elektrischen Motoren (8, 9) antriebsverbunden ist.

6. Betätigungsvorrichtung nach einem der vorangehenden Ansprüche,
**dadurch gekennzeichnet,**
**dass** die elektrischen Motoren (8, 9) mit gegenüberliegenden Wellenenden (19, 20) der Schneckenwelle (8) antriebsverbunden sind.

7. Betätigungsvorrichtung nach einem der vorangehenden Ansprüche,
**dadurch gekennzeichnet,**
**dass** jeder elektrische Motor (8, 9) über seine Motorwelle (21, 22) mit dem jeweiligen Wellenende (19, 20) drehfest verbunden ist.

8. Betätigungsvorrichtung nach einem der vorangehenden Ansprüche,
**dadurch gekennzeichnet,**
**dass** jedes Wellenende (19, 20) in einem elektrischen Motor (8, 9) als Motorwelle (21, 22) drehfest angeordnet ist.

9. Betätigungsvorrichtung nach einem der vorangehenden Ansprüche,
**dadurch gekennzeichnet,**
**dass** jedes Wellenende (19, 20) durch Kugellager (23) und/oder Rollenlager (24) im Vorrichtungsgehäuse (3) drehbar gelagert ist.

10. Betätigungsvorrichtung nach einem der vorangehenden Ansprüche,
**dadurch gekennzeichnet,**
**dass** die Getriebeeinrichtung (7) einen Kugelgewindetrieb aus wenigstens einer Kugelmutter (25) und der Drehspindel (4) als Kugelumlaufspindel aufweist.

11. Betätigungsvorrichtung nach einem der vorangehenden Ansprüche,
**dadurch gekennzeichnet,**
**dass** die Getriebeeinrichtung (7) einen Rollengewindetrieb aus wenigstens einer Rollenmutter (25) und der Drehspindel (4) als Rollenumlaufspindel aufweist.

12. Betätigungsvorrichtung nach einem der vorangehenden Ansprüche,
**dadurch gekennzeichnet,**
**dass** der Rollengewindetrieb ein Planetenrollengewindetrieb ist.

13. Betätigungsvorrichtung nach einem der vorangehenden Ansprüche,
**dadurch gekennzeichnet,**
**dass** die Gewindetriebmutter (25) in einer Lagerhülse (26) angeordnet ist, die im Vorrichtungsgehäuse (3) drehbar, aber axial unverschieblich gelagert ist.

14. Betätigungsvorrichtung nach einem der vorangehenden Ansprüche,
**dadurch gekennzeichnet,**
**dass** an wenigstens einem Ende (27) der Gewindetriebmutter (25) eine Endverzahnung (28) angeordnet ist, die mit einer Verzahnung des Schneckenrades (17) in Eingriff ist.

15. Betätigungsvorrichtung nach einem der vorangehenden Ansprüche,
**dadurch gekennzeichnet,**
**dass** die Endverzahnung (28) vom Schneckenrad (17) gebildet ist.

16. Betätigungsvorrichtung nach einem der vorangehenden Ansprüche,
**dadurch gekennzeichnet,**
**dass** das Schneckenrad (17) lösbar insbesondere an der Gewindetriebmutter (25) befestigt ist.

17. Betätigungsvorrichtung nach einem der vorangehenden Ansprüche,
**dadurch gekennzeichnet,**
**dass** das Schneckenrad (17) ein Globoidrad ist.

18. Betätigungsvorrichtung nach einem der vorangehenden Ansprüche,
**dadurch gekennzeichnet,**
**dass** die Schnecke (16) eine Zylinderschnecke ist.

19. Betätigungsvorrichtung nach einem der vorangehenden Ansprüche,
**dadurch gekennzeichnet,**
**dass** die Lagerhülse (26) mittels wenigstens einen Axiallagers (29) im Vorrichtungsgehäuse (3) gelagert ist.

20. Betätigungsvorrichtung nach einem der vorangehenden Ansprüche,
**dadurch gekennzeichnet,**
**dass** wenigstens einem elektrischen Motor (8, 9) eine insbesondere manuell betätigbare Notbetätigungseinrichtung (30) zugeordnet ist.

21. Betätigungsvorrichtung nach einem der vorangehenden Ansprüche,
**dadurch gekennzeichnet,**
**dass** die Notbetätigungseinrichtung (30) einen in Richtung Bereitschaftsstellung (31) federbeaufschlagten Drehbolzen (32) aufweist, der an seinem dem elektrischen Motor (8, 9) zuweisenden Ende (33) mit der Motorwelle (21, 22) drehfest verbindbar ist.

22. Betätigungsvorrichtung nach einem der vorangehenden Ansprüche,
**dadurch gekennzeichnet,**
**dass** der Drehbolzen (32) durch eine Bohrung (34) einer Außenwandung (35) des Vorrichtungsgehäuses (3) abgedichtet nach außen geführt ist und dort ein Betätigungsende (36) aufweist.

23. Betätigungsvorrichtung nach einem der vorangehenden Ansprüche,
**dadurch gekennzeichnet,**
**dass** das Vorrichtungsgehäuse (3) einen Zentralkörper (37) aus Metall, insbesondere Aluminium, aufweist, in dessen Mittelbohrung (38) die Gewindetriebmutter (25) gelagert ist und entlang welcher sich die Drehspindel (4) erstreckt.

24. Betätigungsvorrichtung nach einem der vorangehenden Ansprüche,
**dadurch gekennzeichnet,**
**dass** der Zentralkörper (37) zwei radial nach außen offene Motoröffnungen (39, 40) aufweist, in denen jeweils ein elektrischer Motor (8, 9) lösbar befestigt ist, wobei sich zwischen den Motoröffnungen (39, 40) und im Wesentlichen tangential zur Mittelbohrung (38) eine Verbindungsöffnung (41) zur Anordnung von Schneckenwelle (18) und Schnecke (16) erstreckt.

25. Betätigungsvorrichtung nach einem der vorangehenden Ansprüche,
**dadurch gekennzeichnet,**
**dass** der Zentralkörper (37) an einem seiner Enden (42) mit einer Endplatte (43) lösbar verschlossen ist.

26. Betätigungsvorrichtung nach einem der vorangehenden Ansprüche,
**dadurch gekennzeichnet,**
**dass** der Zentralkörper (37) im Wesentlichen zylindrisch ausgebildet und in einer an einem Ende von einer Deckplatte (45) lösbar verschließbaren Gehäusehülse (46) angeordnet ist.

27. Betätigungsvorrichtung nach einem der vorangehenden Ansprüche,
**dadurch gekennzeichnet,**
**dass** von einer Außenseite (47) der Deckplatte (45) ein Hebezapfen (48) absteht.

28. Betätigungsvorrichtung nach einem der vorangehenden Ansprüche,
**dadurch gekennzeichnet,**
**dass** ein Positionssensor (49) in der Endplatte (43) angeordnet und einem Ende (50) der Drehspindel (4) zugeordnet ist.

29. Betätigungsvorrichtung nach einem der vorangehenden Ansprüche,
**dadurch gekennzeichnet,**
**dass** Zentralkörper (37) und/oder Gehäusehülse (46) an einem Drosselgehäuse (51) lösbar befestigbar sind, wobei sie mit ihren durch Endplatte (43) bzw. Deckplatte (45) unverschlossenen Befestigungsenden (52, 53) von außen am Drosselgehäuse (51) anlegbar sind.

30. Betätigungsvorrichtung nach einem der vorangehenden Ansprüche,
**dadurch gekennzeichnet,**
**dass** die Gehäusehülse (46) einen radial auswärts weisenden Absatz (54) an ihrem Befestigungsende (53) aufweist, der von einem an einem Befestigungsring (55) radial einwärts vorstehenden Absatz (56) hintergreifbar ist.

31. Betätigungsvorrichtung nach einem der vorangehenden Ansprüche,
**dadurch gekennzeichnet,**
**dass** das Betätigungselement (6) über das offene Befestigungsende (52) des Zentralkörpers (37) vorsteht und entlang einer Drosselelementbohrung (57) im Drosselgehäuse (51) bis in einen Drosselraum (58) vorschiebbar ist, wobei der Drosselraum (58) einen Fluideinlass (59) und einen Fluidauslass (60) im Drosselgehäuse (51) verbindet.

32. Betätigungsvorrichtung nach einem der vorangehenden Ansprüche,
**dadurch gekennzeichnet,**
**dass** im Wesentlichen am freien Ende (61) des Betätigungselements (6) ein Drosselelement (62) zur Variation des Fluiddurchlasses im Drosselraum (58) angeordnet ist.

33. Betätigungsvorrichtung nach einem der vorangehenden Ansprüche,
**dadurch gekennzeichnet,**
**dass** das Drosselelement (62) als eine auf eine gelochte Durchlasshülse (63) aufschiebbare Drosselhülse (64) ausgebildet sind.

34. Betätigungsvorrichtung nach einem der vorangehenden Ansprüche,
**dadurch gekennzeichnet,**
**dass** das Drosselelement (62) als ein eine in den Drosselraum (58) mündende Durchlassbohrung (65) des Fluideinlasses (59) variabel verschließbarer Verschlussstopfen (66) ausgebildet ist.

35. Betätigungsvorrichtung nach einem der vorangehenden Ansprüche,
**dadurch gekennzeichnet,**
**dass** Drehspindel (4) und Betätigungselement (6) koaxial angeordnet und an ihren aufeinanderzuweisenden Enden (67, 68) lösbar miteinander verbunden sind.

36. Betätigungsvorrichtung nach einem der vorangehenden Ansprüche,
**dadurch gekennzeichnet,**
**dass** die elektrischen Motoren (8, 9) softwaremäßig synchronisiert sind.

37. Betätigungsvorrichtung nach einem der vorangehenden Ansprüche,
**dadurch gekennzeichnet,**
**dass** ein elektrischer Motor (8, 9) als Master und der andere elektrische Motor (9, 8) als Slave oder beide Motoren als Master geschaltet ist.

38. Betätigungsvorrichtung nach einem der vorangehenden Ansprüche,
**dadurch gekennzeichnet,**
**dass** in der Endplatte (43) elektrische Durchführungen (69) angeordnet sind.

39. Betätigungsvorrichtung nach einem der vorangehenden Ansprüche,
**dadurch gekennzeichnet,**
**dass** das Vorrichtungsgehäuse (3) ölgefüllt und kompensiert ist.

## Claims

1. Actuating device (1), especially for use in a throttle device (2), comprising a turning spindle (4) rotatably mounted in a device housing (3) and functionally being connected via a transmission device (7) with a drive device (5) to displace an actuating element (6) connected with the turning spindle (4), **characterized in that**
the drive device (5) comprises at least two alternatively and redundantly or synchronously operable electric motors (8, 9) for displacing said actuating element (66) and **in that** the transmission device (7) comprises at least one self-locking transmission unit (10), said transmission unit (10) being functionally connected with the two electric motors (8, 9) for turning the turning spindle (4) and comprises a worm gear transmission (15) at least consisting of a worm (16) and a worm gear (17), with the worm gear (17) being associated with the turning spindle (4) and the worm (16) being associated with the electric motors (8, 9), wherein the transmission device (7) comprises a ball screw drive of at least one ball nut (25) and the turning spindle (4).

2. Actuating device according to claim 1, **characterized in that** the electric motor is a servomotor, especially a direct current servomotor.

3. Actuating device according to claim 1 or 2, **characterized in that** each electric motor (8, 9) is electrically connected with a separate control device (11, 12).

4. Actuating device according to one of the preceding claims, **characterized in that** an electrical connection (12, 14) is formed in the device housing (3) for each electric motor (8, 9).

5. Actuating device according to one of the preceding claims, **characterized in that** the worm (16) is arranged on a worm shaft (18) functionally connected with both electric motors (8, 9).

6. Actuating device according to one of the preceding claims, **characterized in that** the electric motors (8, 9) are functionally connected with opposite shaft ends (19, 20) of the worm shaft (8).

7. Actuating device according to one of the preceding claims, **characterized in that** each electric motor (8, 9) is connected via its motor shaft (21, 22) with the respective shaft end (19, 20) in a manner secured against rotation.

8. Actuating device according to one of the preceding claims, **characterized in that** each shaft end (19 20) in an electric motor (8, 9) is arranged as motor shaft (21, 22) in manner secured against rotation.

9. Actuating device according to one of the preceding claims, **characterized in that** each shaft end (19, 20) is rotatably mounted in the device housing (3) by means of ball bearings (23) and/or roller bearings (24).

10. Actuating device according to one of the preceding claims, **characterized in that** the transmission device (7) comprises a ball screw drive of at least one ball nut (25) and the turning spindle (4) as recirculating ball screw.

11. Actuating device according to one of the preceding claims, **characterized in that** the transmission device 87) comprises a roller thread drive of at least one roller nut (25) and the turning spindle (4) as recirculating roller spindle.

12. Actuating device according to one of the preceding claims, **characterized in that** the roller thread is a planetary roller thread drive.

13. Actuating device according to one of the preceding claims, **characterized in that** the thread nut 825) is arranged in a bearing sleeve (2) rotatably, but axially undisplaceably mounted in the device housing (3).

14. Actuating device according to one of the preceding claims, **characterized in that** an end toothing 828) is arranged on at least one end (27) of the thread nut (25) and is engaged with a toothing of the worm gear (17).

15. Actuating device according to one of the preceding claims, **characterized in that** the end toothing (28) is formed by the worm gear (17).

16. Actuating device according to one of the preceding claims, **characterized in that** the worm gear 817) is detachably fastened especially to the thread nut (25).

17. Actuating device according to one of the preceding claims, **characterized in that** the worm gear (17) is a globoid worm wheel.

18. Actuating device according to one of the preceding claims, **characterized in that** the worm (16) is a cylindrical worm.

19. Actuating device according to one of the preceding claims, **characterized in that** the bearing sleeve (26) is mounted by at least one axial bearing (29) in the device housing (3).

20. Actuating device according to one of the preceding claims, **characterized in that** a particularly manually actuated emergency actuating device (30) is allocated to at least one electric motor (8, 9).

21. Actuating device according to one of the preceding claims, **characterized in that** the emergency actuating device (30) comprises a pintail (32) spring-loaded in the direction of the ready position (31) and connectable with the motor shaft (21, 22) on its end (33) facing the electric motor (8, 9) in a manner secured against rotation.

22. Actuating device according to one of the preceding claims, **characterized in that** the pintail (32) is guided through a bore (34) of an outer wall (35) of the device housing (3) in a sealed manner towards the outside, where it has an actuating end (36).

23. Actuating device according to one of the preceding claims, **characterized in that** the device housing (3) comprises a central body (37) of metal, especially of aluminum, in the central bore (38) of which the thread nut (25) is mounted and along which the turning spindle (4) extends.

24. Actuating device according to one of the preceding claims, **characterized in that** the central body (37) comprises two motor openings (39, 40) open towards the outside in a radial direction, in each of which an electric motor (8, 9) is detachably fastened, with a connection opening (41) extending between the motor openings (39, 40) and substantially tangentially to the central bore (38) for the arrangement of worm shaft (18) and worm (16).

25. Actuating device according to one of the preceding claims, **characterized in that** the central body (37) is releasably closed with an end plate (43) on one of its ends (42).

26. Actuating device according to one of the preceding claims, **characterized in that** the central body (37) is substantially cylindrical and arranged in a housing shell (46) releasably closable on one end by a cover plate (45).

27. Actuating device according to one of the preceding claims, **characterized in that** a lifting journal (48) stands out from an outer side (47) of the cover plate (45).

28. Actuating device according to one of the preceding claims, **characterized in that** a position sensor (49) is arranged in the end plate (43) and allocated to one end (50) of the turning spindle (4).

29. Actuating device according to one of the preceding claims, **characterized in that** the central body (37) and/or the housing shell (46) are detachably fastened on a throttle housing (51) with both being fixable on the throttle housing (51) from outside by their fastening ends (52, 53) unsealed by he end plate (43) or cover plate (45).

30. Actuating device according to one of the preceding claims, **characterized in that** the housing shell (46) comprises a radially outwardly facing shoulder (54) on its fastening end (53) which can be gripped from behind by a shoulder (56) radially inwardly protruding from a fastening ring (55).

31. Actuating device according to one of the preceding claims, **characterized in that** the actuating element (6) protrudes over the open fastening end (52) of the central body (37) and can be pushed in a forward direction along a throttle element bore (57) in the throttle housing (51) right into a throttle space (58), with the throttle space (58) connecting a fluid inlet (59) and a fluid outlet (69Ä) in the throttle housing (51).

32. Actuating device according to one of the preceding claims, **characterized in that** a throttle element (62) for varying the fluid passage in the throttle space (58) is arranged substantially on the free end (61) of the actuating element (6).

33. Actuating device according to one of the preceding claims, **characterized in that** the throttle element (61) is formed as a throttle sleeve (64) slipable onto a perforated passage sleeve (63).

34. Actuating device according to one of the preceding claims, **characterized in that** the throttle element (62) is formed as a sealing plug (66) variably sealing a passage bore (65) of the fluid inlet (59) funning into the throttle space (58).

35. Actuating device according to one of the preceding claims, **characterized in that** the turning spindle (4) and the actuating element (6) are coaxially arranged and are detachably connected with each other on their ends (67, 68) facing each other.

36. Actuating device according to one of the preceding claims, **characterized in that** the electric motors (8, 9) are synchronized by software.

37. Actuating device according to one of the preceding claims, **characterized in that** one electric motor (8, 9) is connected as master and the other electric motor (8, 9) is connected as slave or both motors are connected as master.

38. Actuating device according to one of the preceding claims, **characterized in that** electrical ducts (69) are arranged in the end plate (43).

39. Actuating device according to one of the preceding claims, **characterized in that** the device housing (3) is filled with oil and compensated.

## Revendications

1. Dispositif d'actionnement (1), notamment pour un dispositif d'étranglement (2), comportant une broche rotative (4), qui est montée de manière à pouvoir tourner dans un boîtier (3) du dispositif et est reliée selon une liaison motrice à un dispositif d'entraînement (5) pour déplacer un élément d'actionnement (6), relié à la broche rotative, par l'intermédiaire d'un dispositif de transmission (7),
**caractérisé en ce que** le dispositif d'entraînement (5) comporte au moins deux moteurs électriques (8,9), qui peuvent fonctionner d'une manière alternative et redondante ou d'une manière synchrone pour le déplacement de l'élément d'actionnement (6), et le dispositif de transmission (7) comporte au moins une unité de transmission autobloquante, laquelle unité de transmission (10) est reliée selon une liaison motrice aux deux moteurs électriques (8,9), pour faire tourner la broche (4) et comporte un mécanisme à vis sans fin (15) formé par au moins une vis sans fin (16) et une roue tangente (17), la roue tangente (17) de la broche rotative (4) et la vis sans fin (16) étant associées à la broche rotative (4), et la vis sans fin (16) étant associée aux moteurs électriques (8,9), et le dispositif de transmission (7) comportant un dispositif d'entraînement à vissage constitué par au moins un écrou (25) et la broche rotative (4).

2. Dispositif d'actionnement selon la revendication 1, **caractérisé en ce**
**que** le moteur électrique est un servomoteur, notamment un servomoteur à courant continu.

3. Dispositif d'actionnement selon la revendication 1 ou 2, **caractérisé en ce**
**que** chaque moteur électrique (8,9) est relié électriquement à un dispositif de commande séparé (11,12).

4. Dispositif d'actionnement selon l'une des revendications précédentes, **caractérisé en ce**
**que** pour chaque moteur électrique (8,9) une borne électrique (13, 14) est formée dans le boîtier (3) du dispositif.

5. Dispositif d'actionnement selon l'une des revendications précédentes, **caractérisé en ce**
**que** la vis sans fin (16) est disposée sur un arbre de vis sans fin (18), qui est relié selon une liaison motrice aux deux moteurs électriques (8,9).

6. Dispositif d'actionnement selon l'une des revendications précédentes, **caractérisé en ce**
**que** les moteurs électriques (8,9) sont reliés selon une liaison motrice à des extrémités opposées (19,20) de l'arbre de vis sans fin (8).

7. Dispositif d'actionnement selon l'une des revendications précédentes, **caractérisé en ce**
**que** chaque moteur électrique (8,9) est relié solidairement en rotation aux extrémités respectives (19,20) de l'arbre, par l'intermédiaire de l'arbre (21,22) du moteur.

8. Dispositif d'actionnement selon l'une des revendications précédentes, **caractérisé en ce**
**que** chaque extrémité (19,20) de l'arbre est montée solidairement en rotation dans un moteur électrique (8,9) en tant qu'arbre (21,22) du moteur.

9. Dispositif d'actionnement selon l'une des revendications précédentes, **caractérisé en ce**
chaque extrémité (19,20) de l'arbre est montée de manière à pouvoir tourner au moyen de roulements à billes (23) et/ou de roulements à rouleaux (24) dans le boîtier (3) du dispositif.

10. Dispositif d'actionnement selon l'une des revendications précédentes, **caractérisé en ce**
**que** le dispositif de transmission (7) comporte un dispositif d'entraînement à vis et billes constitué par au moins un écrou à billes (25) et la broche d'entraînement (4) en tant que broche à circulation de billes.

11. Dispositif d'actionnement selon l'une des revendications précédentes, **caractérisé en ce**
**que** le dispositif de transmission (7) comporte un dispositif d'entraînement fileté à rouleaux constitué par au moins un écrou à rouleaux (25) et la broche rotative (4) en tant que broche à circulation de rouleaux.

12. Dispositif d'actionnement selon l'une des revendications précédentes, **caractérisé en ce**
**que** le dispositif d'entraînement fileté à rouleaux est un dispositif d'entraînement planétaire à rouleaux.

13. Dispositif d'actionnement selon l'une des revendications précédentes, **caractérisé en ce**
**que** l'écrou (25) du dispositif d'entraînement fileté est disposé dans un coussinet de palier (26), qui est monté de manière à pouvoir tourner dans le boîtier (3) du dispositif, mais est immobile axialement.

14. Dispositif d'actionnement selon l'une des revendications précédentes, **caractérisé en ce**
**que** sur au moins une extrémité (27) de l'écrou (25) du dispositif d'entraînement fileté (25) est disposée une denture d'extrémité (28), qui engrène avec une denture de la roue tangente (17).

15. Dispositif d'actionnement selon l'une des revendications précédentes, **caractérisé en ce**
**que** la denture d'extrémité (28) est formée par la roue tangente (17).

16. Dispositif d'actionnement selon l'une des revendications précédentes, **caractérisé en ce**
**que** la roue tangente (17) est fixée de façon amovible notamment sur l'écrou (25) du dispositif d'entraînement fileté (25).

17. Dispositif d'actionnement selon l'une des revendications précédentes, **caractérisé en ce**
**que** la roue tangente (17) est une roue globoïde.

18. Dispositif d'actionnement selon l'une des revendications précédentes, **caractérisé en ce**
**que** la vis sans fin (16) est une vis sans fin cylindrique.

19. Dispositif d'actionnement selon l'une des revendications précédentes, **caractérisé en ce**
**que** le coussinet de palier (26) est supporté dans le boîtier (3) du dispositif à l'aide d'au moins un palier axial (29).

20. Dispositif d'actionnement selon l'une des revendications précédentes, **caractérisé en ce**
**qu'**un dispositif d'actionnement d'urgence (30) pouvant être actionné notamment manuellement est associé à au moins un moteur électrique (8,9).

21. Dispositif d'actionnement selon l'une des revendications précédentes, **caractérisé en ce**
**que** le dispositif d'actionnement d'urgence (30) possède un goujon rotatif, qui est chargé élastiquement en direction de la position prête pour le fonctionnement (31) et qui peut être relié solidairement en rotation à l'arbre (21,22) du moteur au niveau de son extrémité (33) tournée vers le moteur électrique (8,9).

22. Dispositif d'actionnement selon l'une des revendications précédentes, **caractérisé en ce**
**que** le goujon rotatif (32) est guidé dans un perçage (34) d'une paroi extérieure (35) du boîtier (3) du dispositif en étant étanchéifié vis-à-vis de l'extérieur et comporte, en cet endroit, une extrémité d'actionnement (36).

23. Dispositif d'actionnement selon l'une des revendications précédentes, **caractérisé en ce**
**que** le boîtier (3) du dispositif comporte un corps central (37) formé d'un métal, notamment de l'aluminium, dans le perçage central (38) duquel est monté l'écrou (25) du dispositif d'entraînement fileté (25) et le long duquel s'étend la broche rotative (4).

24. Dispositif d'actionnement selon l'une des revendications précédentes, **caractérisé en ce**
**que** le corps central (37) comporte deux ouvertures (39,40) du moteur, qui sont ouvertes radialement vers l'extérieur et dans lesquelles peut être fixé respectivement un moteur électrique (8,9), une ouverture de liaison (41) pour le montage de l'arbre de vis sans fin (18) et de la vis sans fin (16) s'étendant entre les ouvertures (39,40) pour les moteurs et sensiblement tangentiellement au perçage médian (38).

25. Dispositif d'actionnement selon l'une des revendications précédentes, **caractérisé en ce**
**que** le corps central (37) est fermé de façon amovible, au niveau de l'une de ses extrémités (42), par une plaque d'extrémité (43).

26. Dispositif d'actionnement selon l'une des revendications précédentes, **caractérisé en ce**
**que** le corps central. (37) est agencé avec une forme essentiellement cylindrique et est disposé dans une douille (46) du boîtier, qui peut être fermée de façon amovible, au niveau d'une extrémité, par une plaque de fermeture (45).

27. Dispositif d'actionnement selon l'une des revendications précédentes, **caractérisé en ce**
**qu'**un bouton de levage (48) fait saillie sur une face extérieure (47) de la plaque de fermeture (45).

28. Dispositif d'actionnement selon l'une des revendications précédentes, **caractérisé en ce**
**qu'**un capteur de position (49) est disposé dans la plaque d'extrémité (43) et est associé à une extrémité (50) de la broche rotative (4).

29. Dispositif d'actionnement selon l'une des revendications précédentes, **caractérisé en ce**
**que** le corps central (37) et/ou la douille (46) du boîtier peuvent être fixés de façon amovible sur le boîtier d'étranglement (51), le corps s'appliquant de l'extérieur sur le boîtier d'étranglement (51), par ses extrémités de fixation (52, 53) non fermées par une plaque d'extrémité (43) ou une plaque de fermeture (45).

30. Dispositif d'actionnement selon l'une des revendications précédentes, **caractérisé en ce**
**que** la douille (46) du boîtier possède sur son extrémité de fixation (53), une partie étagée (54) dirigée radialement vers l'extérieur et derrière laquelle peut s'engager une partie étagée (56) qui fait saillie radialement vers l'intérieur sur une bague de fixation (55).

31. Dispositif d'actionnement selon l'une des revendications précédentes, **caractérisé en ce**
**que** l'élément d'actionnement (6) fait saillie sur l'extrémité ouverte de fixation (52) du corps central (37) et peut avancer le long d'un perçage (57) de l'élément d'étranglement dans le boîtier d'étranglement (51) jusque dans un espace d'étranglement (58), l'espace d'étranglement (58) reliant une entrée (59) pour le fluide et une sortie (60) pour le fluide dans le boîtier d'étranglement (51).

32. Dispositif d'actionnement selon l'une des revendications précédentes, **caractérisé en ce**
**qu'**un élément d'étranglement (62) servant à modifier le passage du fluide dans l'espace d'étranglement (58) est disposé essentiellement sur l'extrémité libre (61) de l'élément d'actionnement (6).

33. Dispositif d'actionnement selon l'une des revendications précédentes, **caractérisé en ce**
**que** l'élément d'étranglement (62) est agencé sous la forme d'une douille d'étranglement (64) pouvant être emmanchée sur une douille de traversée perforée (63).

34. Dispositif d'actionnement selon l'une des revendications précédentes, **caractérisé en ce**
**que** l'élément d'étranglement (62) est agencé sous la forme d'un bouchon de fermeture (66) qui peut fermer de manière variable un perçage traversant (65), qui débouche dans l'espace d'étranglement (58), de l'entrée (59) pour le fluide.

35. Dispositif d'actionnement selon l'une des revendications précédentes, **caractérisé en ce**
**que** la broche rotative (4) et l'élément d'actionnement (6) sont disposés coaxialement et sont reliés entre eux de façon amovible au niveau de leurs extrémités (67,68) tournées l'une vers l'autre.

36. Dispositif d'actionnement selon l'une des revendications précédentes, **caractérisé en ce**
**que** les moteurs électriques (8,9) sont synchronisés en mode logiciel.

37. Dispositif d'actionnement selon l'une des revendications précédentes, **caractérisé en ce**
**qu'**un moteur électrique (8,9) est branché en tant que maître et l'autre moteur électrique (8,9) est branché en tant qu'esclave ou que les deux moteurs sont branchés en tant que maîtres.

38. Dispositif d'actionnement selon l'une des revendications précédentes, **caractérisé en ce**
**que** des traversées électriques (69) sont disposées dans la plaque d'extrémité (43).

39. Dispositif d'actionnement selon l'une des revendications précédentes, **caractérisé en ce**
**que** le boîtier (3) du dispositif est rempli d'huile et est compensé.
